# EUROPÄISCHE PATENTSCHRIFT

(11) **EP 3 969 274 B1**
(45) Veröffentlichungstag und Bekanntmachung des Hinweises auf die Patenterteilung: **15.02.2023**
(21) Anmeldenummer: 20724535.8
(22) Anmeldetag: 14.05.2020
(51) Int. Cl.: B32B 7/025, B32B 15/14, B32B 15/08, B32B 15/20, B32B 5/02, C08J 5/06, D06M 10/10

(54) **FASERMETALLAMINATE MIT ELEKTRISCH ISOLIERTEN KOHLENSTOFFASERN**
FIBER METAL LAMINATES COMPRISING ELECTRICALLY INSULATED CARBON FIBERS
STRATIFIÉS MÉTAL-FIBRES COMPRENANT DES FIBRES DE CARBONE ISOLÉES ÉLECTRIQUEMENT

(30) Priorität: 15.05.2019 LU 101217
(43) Veröffentlichungstag der Anmeldung: 23.03.2022
(73) Patentinhaber: Airbus Operations GmbH, 21129 Hamburg (DE)
(72) Erfinder: LINDE, Peter, 21129 Hamburg (DE)
(86) Internationale Anmeldenummer: PCT/EP2020/063530
(87) Internationale Veröffentlichungsnummer: WO 2020/229627

(56) Entgegenhaltungen:
- EP-A1- 3 462 525
- EP-A2- 2 582 288
- DE-A1-102011 004 801
- US-A1- 2019 119 472

## Beschreibung

### Gebiet der Erfindung

Die Erfindung betrifft beschichtete Kohlenstofffasern. Damit ist es möglich, Kohlenstofffasern für Anwendungen zum Einsatz zu bringen, die mit herkömmlichen, unbeschichteten Kohlenstofffasern nicht bestehen.

### Hintergrund der Erfindung

Der Rumpf und die Tragflächen eines modernen Passagierflugzeugs bestehen aus einem steifen Rahmen mit Versteifungselementen, wie zum Beispiel Stringer, Spante, Holme usw., die mit einer Metall- oder Verbundhaut überzogen sind, welche abhängig von den spezifischen Anforderungen flexibel oder steif gestaltet sein kann. Beispielsweise umfasst das Rumpfgerüst üblicherweise eine Reihe von Spanten, die entsprechend der Form des Rumpfquerschnitts in Umfangsrichtung gebogen sind, und eine Vielzahl von Längsversteifungen (Stringer), die mit den Spanten verbunden sind. Die Haut selbst besteht gewöhnlich aus vielen einzelnen Hautplatten, die typischerweise durch Nieten, Bolzen, Schrauben und andere Befestigungsmittel an diesem darunterliegenden strukturellen Rahmen befestigt sind und aus Metallblechen oder Metalllegierungsblechen, z.B. Aluminiumblechen oder aus einem Fasermetalllaminat, z.B. GLARE^{®} oder aus einem faserverstärkten Kunststoff, z. B. kohlenstofffaserverstärktem Kunststoff (CFK) mit einer Epoxidharzmatrix oder dergleichen bestehen. Allen diesen Anwendungen ist gemeinsam, dass die Flugzeughaut hauptsächlich für grundlegende strukturelle und aerodynamische Zwecke einschließlich des allgemeinen Schutzes vor Hitze, Druck, Blitzen, Höhenstrahlung usw., der Bereitstellung von struktureller Festigkeit, der Verringerung des Luftwiderstands sowie der Übertragung von aerodynamischen Kräften, Lasten und Drücken auf die darunterliegende Struktur optimiert ist.

Kohlenstofffasern bestehen aus Kohlenstoff und können durch pyrolytische Zersetzung von kohlenstoffhaltigen Fasern erhalten werden. Besondere Verbreitung hat die Herstellung aus Polyacrylnitrilfasern, die sehr zugfeste Fasern ergibt. Die dünnen Fasern werden zu Faserbündeln zusammengefasst und diese können zu Geweben verwoben werden. Bettet man Kohlenstofffasern in eine Kunststoffmatrix ein, so erhält man kohlefaserverstärkten Kunststoff (CFK). Die Matrix kann aus duromeren Harzen wie Epoxidharz sein oder aus thermoplastischen Kunststoffen bestehen. Die Kombination von CFK und Aluminium (also etwa Befestigung von CFK-Werkstücken mit Aluminium-Befestigungsmitteln erfordert eine elektrische Isolierung der Berührungsflächen, da es aufgrund der Potenzialdifferenz zwischen Kohlenstoff und Aluminium zu einem Stromfluss kommt, der das Aluminium zerstört (elektrolytische Korrosion).

Verbundwerkstoffe wie CFK werden in der Luft- und Raumfahrt zunehmend eingesetzt, da Konstrukteure die strukturelle Leistung verbessern und gleichzeitig das Gewicht des Fahrzeugs bzw. Flugzeugs und damit den Kraftstoffverbrauch reduzieren können. Die neuesten Techniken zum Verlegen von Bändern (engl. tape lying) sowie zum Platzieren von Fasern (engl. fiber placement) zur Herstellung von Verbundwerkstoffen bieten eine große Quelle noch nicht erschlossenen Potenzials, um unter anderem die Hautstruktur zu verbessern und strukturelle und funktionelle Elemente direkt in die Haut eines Flugzeugs einzubringen.

Faser-Metall-Laminate (engl. fiber metal laminates, FML) sind bekannt. Es handelt sich um flächige Materialien, bei denen Metall und faserverstärkter Kunststoff in Schichten alternierend miteinander verklebt sind. Bekannt sind beispielsweise ARRAL, TIGRA und GLARE. Solche Materialien können im Flugzeugbau eingesetzt werden. ARRAL stellt ein Material aus aramidfaserverstärktem Kunststoff und Aluminium dar. TIGRA besteht aus Titanblech und kohlefaserverstärkten Kunststoff (CFK). GLARE ist ein Material aus Aluminium und glasfaserverstärktem Kunststoff und wird beim Bau des Airbus A 380 eingesetzt. Im Flugzeugbau ist es stets wünschenswert, Materialien mit geringen spezifischen Gewicht und gleichzeitig hoher spezifische Festigkeit zu verwenden.

Faser-Metall-Laminate aus Aluminium und CFK sind daher zwar ein sehr wünschenswertes Material, sie können jedoch nicht ohne weiteres verwendet werden, weil der Kontakt von Kohlenstofffasern mit Aluminium zu elektrolytischer Korrosion führt.

Es ist auch bekannt, Wandpaneele mit Strom speichernden Eigenschaften herzustellen. Dies können beispielsweise so genannte Strukturbatterien sein. Dabei bildet mindestens eine der Strukturschichten eine äußere Stützschicht der Hautplatte, mindestens eine der strukturellen Schichten eine innere Stützschicht der Hautplatte und dazwischen sind primäre Funktionsschichten eingebettet. Die Strukturschichten und die primären Funktionsschichten sind zusammen als Verbundlaminat ausgebildet. Die Funktionsschichten umfassen eine Energiespeicherschicht, die als strukturelle elektrochemische Batterie konfiguriert ist.

US 2019/119472 A1 offenbart einen Schichtverbund für ein Luftfahrzeug enthaltend beschichtete Kohlenstofffasern, wobei die Beschichtung elektrisch isolierend ist und als isolierende Beschichtung der einzelnen Fasern Dibromocyclopropyl-Gruppen oder Polysilazane verwendet werden.

### Beschreibung der Erfindung

Ausgehend von all dem hat sich nun für den Fachmann nicht vorhersehbar herausgestellt, dass ein Schichtverbund für ein Luft- oder Raumfahrzeug enthaltend beschichtete erste Kohlenstofffasern, wobei die Beschichtung elektrisch isolierend ist, den Nachteilen des Standes der Technik abhilft. Als isolierende Beschichtung der einzelnen Fasern werden Po ly(meth)acrylsäurepolyglycolester verwendet, insbesondere solche, die unter Verwendung der Monomere PEG(350)-methylmethacrylat

CH₂=C(CH₃)-(C=O)-O-(CH₂-O-)₃₅₀-OCH₃

und/oder Tetraethylenglycoletherdimethacrylat

CH₂=C(CH₃)-(C=O)-O-CH₂-O-CH₂-O-CH₂-O-CH₂-O-(C=O)-C(CH₃)=CH₂

hergestellt werden können. Die Monomere werden durch Elektropolymerisation auf die Kohlenstofffasern aufpolymerisiert ("gegrafted"). Die (Meth)acrylsäurepolyglycolester werden in Dimethylformamid gelöst verwendet. In dieser Lösung werden die Kohlenstofffasern eingetaucht, als Kathode geschaltet und es bildet sich auf Ihrer Oberfläche eine den elektrischen Strom nicht leitende Schicht aus Poly(meth)acrylsäurepolyglycolestern, die bis zu 500 Nanometer stark ist.

Bevorzugt ist es, wenn der Schichtverbund Aluminiumblech enthält. Dies ist kostengünstiger als z.B. Titan. Bevorzugt ist es, wenn in dem Schichtverbund Aluminiumblech und elektrisch isolierend beschichtete erste Kohlenstofffasern einander wenigstens zum Teil berühren, ganz besonders bevorzugt vollflächig. Solche Schichtverbunde unterliegen nicht elektrolytischer Korrosion zwischen beschichteten Fasern und metallischer Schicht. Bevorzugt ist es, wenn in dem Schichtverbund Aluminiumblech und eine Schicht mit elektrisch isolierend beschichteten ersten Kohlenstofffasern so angeordnet sind, dass die elektrisch isolierend beschichteten ersten Kohlenstofffasern die Schicht aus Aluminiumblech von einer an die Schicht mit elektrisch isolierend beschichteten ersten Kohlenstofffasern angrenzenden Schicht elektrisch isolieren. Bevorzugt ist es, wenn aneinander angrenzende Schichten aus Aluminiumblech und elektrisch isolierend beschichteten ersten Kohlenstofffasern enthalten sind, wobei es besonders bevorzugt ist, wenn an die Schicht mit elektrisch isolierend beschichteten ersten Kohlenstofffasern eine Schicht aus elektrisch leitendem Material angrenzt. Diese kann beispielsweise aus CFK bestehen.

Die Erfindung umfasst auch einen Schichtverbund für ein Luft- oder Raumfahrzeug enthaltend beschichtete erste Kohlenstofffasern, wobei die Beschichtung elektrisch isolierend ist, dadurch gekennzeichnet, dass der Schichtverbund neben den elektrisch isolierend beschichteten ersten Kohlenstofffasern weitere beschichtete Kohlenstoffasern enthält, deren Beschichtung elektrisch leitend ist und wobei einzelne Schichten des Schichtverbundes entweder elektrisch isolierend beschichtete erste Kohlenstofffasern oder elektrisch leitend beschichtete weitere Kohlenstoffasern oder nicht mit einer dieser Beschichtungen versehene Kohlenstoffasern enthalten.

Erfindungsgemäße elektrisch leitend beschichtete Kohlenstoffasern können wie erfindungsgemäße elektrisch isolierend beschichtete Kohlenstoffasern hergestellt werden, wobei die (Meth)acrylsäurepolyglycolester mit Lithiumtrifluormethansulfonat (Lithiumtriflat) im Gewichtsverhältnis 1:1 in Dimethylformamid gelöst verwendet werden. In diese Lösung werden die Kohlenstoffasern eingetaucht, als Kathode geschaltet und es bildet sich auf Ihrer Oberfläche eine den elektrischen Strom leitende Schicht aus Poly(meth)acrylsäurepolyglycolestern, die bis zu 500 Nanometer stark ist und in die das Lithiumtriflat eingelagert ist.

Dabei ist es bevorzugt, wenn wenigstens eine Schicht mit elektrisch leitend beschichteten weiteren Kohlenstoffasern Lithiumsalze enthält. Dabei ist es bevorzugt, wenn der Schichtverbund eine jeweils im Wesentlichen vollflächig berührende Abfolge aus einer Schicht aus Aluminiumblech, einer elektrisch leitenden Schicht als Anode, einer Schicht mit elektrisch isolierend beschichteten erste Kohlenstofffasern, einer Schicht mit elektrisch leitend beschichteten weiteren Kohlenstoffasern enthaltend Lithiumsalze als Kathode und einer Schicht aus Aluminiumblech aufweist. Eine solche Anordnung kann zur Speicherung elektrischer Energie konfiguriert werden und stellt eine Lithiumlonenbatterie dar. Dabei ist es bevorzugt, wenn der Schichtverbund eine jeweils im Wesentlichen vollflächig berührende Abfolge aus einer Schicht aus Aluminiumblech, einer elektrisch leitenden Schicht, einer Schicht mit elektrisch isolierend beschichteten ersten Kohlenstofffasern, einer Schicht mit elektrisch leitend beschichteten weiteren Kohlenstoffasern enthaltend Lithiumsalze und einer Schicht aus Aluminiumblech, einer Schicht mit elektrisch leitend beschichteten weiteren Kohlenstoffasern enthaltend Lithiumsalze, einer Schicht mit elektrisch isolierend beschichteten ersten Kohlenstofffasern, einer elektrisch leitenden Schicht und einer Schicht aus Aluminiumblech aufweist und besonders bevorzugt zur Speicherung elektrischer Energie konfiguriert ist.

Bei allem ist es bevorzugt, wenn der Schichtverbund weniger als 10 Gew.% Glasfasern enthält.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

### Airbus Operations GmbH

### Bezugszeichenliste

- 1: Metallische Schicht
- 2: Schicht aus Faserverbundwerkstoff
- 3: Metallische Schicht
- 4: Schicht aus Faserverbundwerkstoff
- 5: Metallische Schicht
- 6: Anode
- 7: Leitende Trennschicht, Separator
- 8: Kathode
- 9: Kollektor
- 10: Kollektor
- 11: Gefäß
- 12: Oberwerkzeug
- 13: Unterwerkzeug
- 14: Kanal
- 14a: unterer Teil des Kanals
- 15: Anode aus Aluminium
- 16: Separator
- 17: als Anode geschaltete Kohlenstoffasern
- 18: Monomerlösung
- 19: Referenzelektrode
- I_{c}: Zellenlänge

### Detaillierte Beschreibung von Ausführungsformen

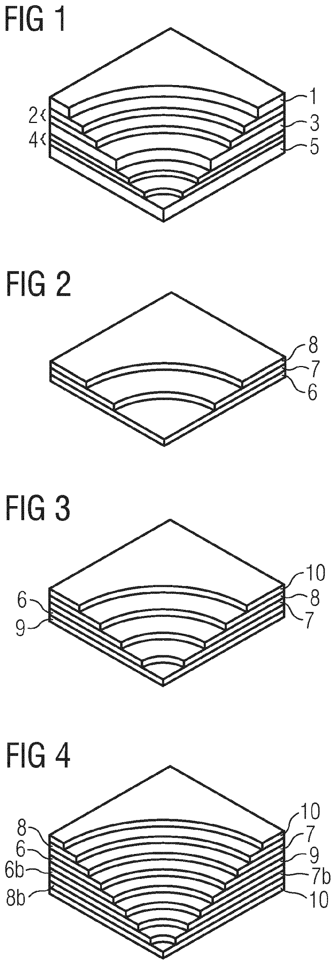

Figur 1 zeigt ein herkömmliches Fasermetalllaminat. Metallische Schichten 1, 3, 5 wechseln sich mit dem Schichten aus Faserverbundwerkstoff 2, 4 ab und sind mit diesen flächig verklebt, wobei auf die Verwendung zusätzlicher Klebeschichten verzichtet werden kann, sofern das Matrixmaterial des Faserverbundkunststoffes so gewählt wird, dass es auch mit den Metallschichten eine gute Verbindung ausbildet. Die Metallschichten können aus Aluminium oder Titan bestehen. Die Schichten aus faserverstärktem Kunststoff können aus kohlefaserverstärktem Kunststoff, glasfaserverstärktem Kunststoff oder aramidfaserverstärktem Kunststoff bestehen. Als Matrix kann beispielsweise Epoxidharz verwendet werden, welches eine besonders gute Haftung ermöglicht.

Figur 2 zeigt eine so genannte Strukturbatterie: Auf einer Anode 6 ist eine elektrisch nicht leitende Trennschicht 7 aus glasfaserverstärktem Kunststoff (Separator) angeordnet. An diese schließt sich eine Kathode 8 aus faserverstärktem Kunststoff an, wobei die Fasern mit einem geeigneten Lithiumsalz beschichte Kohlenstofffasern sind und das Lithiumsalz in die Beschichtung eingelagert oder interkaliert ist. Als Lithiumsalz kann Lithiumtriflat verwendet werden. Die Beschichtung kann durch Elektropolymerisation hergestellt werden.

Figur 3 zeigt, wie eine Strukturbatterien nach Figur 2 herstellbar ist: Anode 6 und Kathode 8 werden mit einem flächigen elektrischen Sammelleiter (Kollektorflächen) verbunden, hier Aluminiumbleche 9 und 10.

Figur 4 zeigt ein Fasermetalllaminat gemäß der Erfindung. Dieses weist metallische Kollektorflächen 9 und 10, eine lithiumhaltige Kathode auf Basis von faserverstärktem Kunststoff 8 und eine Anode 6 aus kohlenstofffaserverstärkten Kunststoff sowie eine Trennschicht 7 auf. Das Fasermetalllaminat gemäß der Erfindung kann zusätzlich wenigstens einen weiteren Satz aus Anode, Separator und Kathode (6b, 7b, 8b) enthalten.

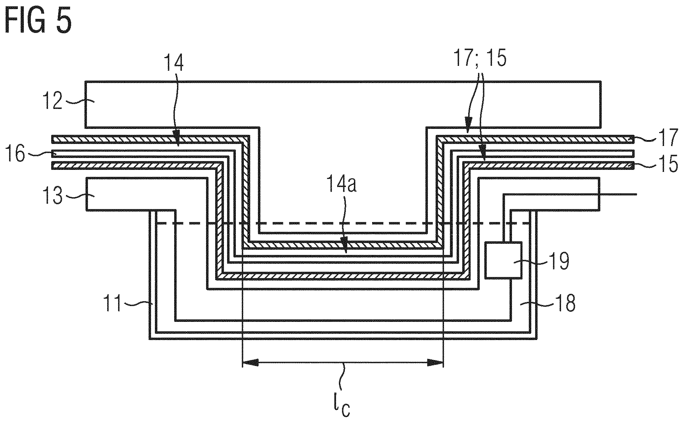

Figur 5 zeigt die Herstellung der erfindungsgemäßen Beschichtung In ein Gefäß 11 wird eine Form, die ein Oberwerkzeug 12 und ein Unterwerkzeug 13 umfasst, positioniert. Zwischen Oberwerkzeug 12 und Unterwerkzeug 13 befindet sich ein Kanal 14, in dem eine Anode aus Aluminium 15, ein Separator 16 und als Anode geschaltetes Material aus Kohlenstoffasern 17 angeordnet sind. Das Gefäß 11 ist mit der Monomerlösung 18 aus (Meth)acrylsäurepolyglycolester gefüllt, so dass auch der untere Teil des Kanals 14 a mit der Lösung gefüllt ist. Eine Referenzelektrode 19 kann zusätzlich vorhanden sein.

Die Apparatur wird unter inerter Atmosphäre betrieben und Kohlenstoffasern werden durch einen angelegten Strom beschichtet und dabei durch das Bad geführt. Durch Wahl der Stromdichte Zellenlänge I_{c} und der Fördergeschwindigkeit der Kohlenstofffasern kann die Schichtdicke der Beschichtung beeinflusst werden. Um elektrisch isolierende Beschichtungen auf die Fasern aufzubringen werden als Monomere (Meth)acrylsäurepolyglycolester in Dimethylformamid gelöst verwendet. In dieser Lösung werden die Kohlenstoffasern als Kathode geschaltet eingetaucht und es bildet sich auf Ihrer Oberfläche eine den elektrischen Strom nicht leitende Schicht aus Poly(meth)acrylsäurepolyglycolestern, die bis zu 500 Nanometer stark ist. Um elektrisch leitende Beschichtungen auf die Fasern aufzubringen werden als Monomere (Meth)acrylsäurepolyglycolester mit Lithiumtrifluormethansulfonat (Lithiumtriflat) im Gewichtsverhältnis 1:1 in Dimethylformamid gelöst verwendet. In dieser Lösung werden die Kohlenstoffasern als Kathode geschaltet eingetaucht und es bildet sich auf Ihrer Oberfläche eine den elektrischen Strom leitende Schicht aus Poly(meth)acrylsäurepolyglycolestern, die bis zu 500 Nanometer stark ist und in die das Lithiumtriflat eingelagert ist.

Es wird angemerkt, dass beschriebenen Ausführungsformen lediglich illustrative und nicht beschränkend sind.

Während die Erfindung illustriert und beschrieben wurde im Detail in den Beispielen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden.

## Patentansprüche

1. Schichtverbund für ein Luft- oder Raumfahrzeug enthaltend beschichtete erste Kohlenstofffasern, wobei die Beschichtung elektrisch isolierend ist und als isolierende Beschichtung der einzelnen Fasern Poly(meth)acrylsäurepolygly-colester verwendet werden.

2. Schichtverbund nach Anspruch 1 **dadurch gekennzeichnet, dass** der Schichtverbund Aluminiumblech enthält.

3. Schichtverbund nach Anspruch 2 **dadurch gekennzeichnet, dass** in dem Schichtverbund Aluminiumblech und elektrisch isolierend beschichtete erste Kohlenstofffasern einander wenigstens zum Teil berühren.

4. Schichtverbund nach Anspruch 2 bis 3 **dadurch gekennzeichnet, dass** in dem Schichtverbund Aluminiumblech und eine Schicht mit elektrisch isolierend beschichteten ersten Kohlenstofffasern so angeordnet sind, dass die elektrisch isolierend beschichteten ersten Kohlenstofffasern die Schicht aus Aluminiumblech von einer an die Schicht mit elektrisch isolierend beschichteten erste Kohlenstofffasern angrenzenden Schicht elektrisch isolieren.

5. Schichtverbund nach Anspruch 2 bis 4 **dadurch gekennzeichnet, dass** aneinander angrenzende Schichten aus Aluminiumblech und elektrisch isolierend beschichteten ersten Kohlenstofffasern enthalten sind.

6. Schichtverbund nach Anspruch 5 **dadurch gekennzeichnet, dass** an die Schicht mit elektrisch isolierend beschichteten ersten Kohlenstofffasern eine Schicht aus elektrisch leitendem Material angrenzt.

7. Schichtverbund nach Anspruch 1 **dadurch gekennzeichnet, dass** der Schichtverbund neben den elektrisch isolierend beschichteten ersten Kohlenstofffasern weitere beschichtete Kohlenstoffasern enthält, deren Beschichtung elektrisch leitend ist und wobei einzelne Schichten des Schichtverbundes entweder elektrisch isolierend beschichtete erste Kohlenstofffasern oder elektrisch leitend beschichtete weitere Kohlenstoffasern oder nicht mit einer dieser Beschichtungen versehene Kohlenstoffasern enthalten.

8. Schichtverbund nach Anspruch 1 oder 7 **dadurch gekennzeichnet, dass** wenigstens eine Schicht mit elektrisch leitend beschichteten weiteren Kohlenstoffasern Lithiumsalze enthält.

9. Schichtverbund nach Anspruch 1, 7 oder 8 **dadurch gekennzeichnet, dass** der Schichtverbund eine jeweils im Wesentlichen vollflächig berührende Abfolge aus einer Schicht aus Aluminiumblech, einer elektrisch leitenden Schicht, einer Schicht mit elektrisch isolierend beschichteten ersten Kohlenstofffasern, einer Schicht mit elektrisch leitend beschichteten weiteren Kohlenstoffasern enthaltend Lithiumsalze und einer Schicht aus Aluminiumblech aufweist.

10. Schichtverbund nach Anspruch 1 oder 7 bis 9 **dadurch gekennzeichnet, dass** der Schichtverbund eine jeweils im Wesentlichen vollflächig berührende Abfolge aus einer Schicht aus Aluminiumblech, einer elektrisch leitenden Schicht, einer Schicht mit elektrisch isolierend beschichteten ersten Kohlenstofffasern, einer Schicht mit elektrisch leitend beschichteten weiteren Kohlenstoffasern enthaltend Lithiumsalze und einer Schicht aus Aluminiumblech, einer Schicht mit elektrisch leitend beschichteten weiteren Kohlenstoffasern enthaltend Lithiumsalze, einer Schicht mit elektrisch isolierend beschichteten ersten Kohlenstofffasern, einer elektrisch leitenden Schicht und einer Schicht aus Aluminiumblech aufweist.

11. Schichtverbund nach einem der vorangehenden Ansprüche **dadurch gekennzeichnet, dass** der Schichtverbund weniger als 10 Gew.% Glasfasern enthält.

## Claims

1. Layered composite for an aircraft or spacecraft containing coated first carbon fibres, the coating being electrically insulating and poly(meth)acrylic acid polyglycol esters being used as the insulating coating of the individual fibres.

2. A layered composite according to claim 1, **characterised in that** the laminate comprises aluminium sheet.

3. A layered composite according to claim 2, **characterised in that** aluminium sheet and electrically insulating coated first carbon fibres are at least partially in contact with one another in the laminated composite.

4. Layered composite according to claim 2 to 3, **characterised in that** aluminium sheet and a layer with electrically insulating coated first carbon fibres are arranged in the layered composite in such a way that the electrically insulating coated first carbon fibres electrically insulate the layer of aluminium sheet from a layer adjacent to the layer with electrically insulating coated first carbon fibres.

5. A layered composite according to claim 2 to 4, **characterised in that** adjacent layers of aluminium sheet and electrically insulating coated first carbon fibres are included.

6. A layered composite according to claim 5, **characterised in that** a layer of electrically conductive material adjoins the layer with electrically insulating coated first carbon fibres.

7. A layered composite according to claim 1, **characterised in that**, in addition to the electrically insulating coated first carbon fibres, the layered composite contains further coated carbon fibres, the coating of which is electrically conductive, and wherein individual layers of the layered composite contain either electrically insulating coated first carbon fibres or electrically conductive coated further carbon fibres or carbon fibres not provided with one of these coatings.

8. Layered composite according to claim 1 or 7, **characterized in that** at least one layer with electrically conductively coated further carbon fibres contains lithium salts.

9. A layered composite according to claim 1, 7 or 8, **characterised in that** the layered composite has a sequence of a layer of aluminium sheet, an electrically conductive layer, a layer with electrically insulatingly coated first carbon fibres, a layer with electrically conductive coated further carbon fibres containing lithium salts and a layer of aluminium sheet, in each case touching substantially the entire surface.

10. A layered composite according to claim 1 or 7 to 9, **characterised in that** the layered composite comprises a sequence, in each case substantially in full-surface contact, of a layer of aluminium sheet, an electrically conductive layer, a layer with electrically insulatingly coated first carbon fibres, a layer with electrically conductive coated further carbon fibres containing lithium salts and a layer of aluminium sheet, a layer with electrically conductive coated further carbon fibres containing lithium salts, a layer with electrically insulatingly coated first carbon fibres, an electrically conductive layer and a layer of aluminium sheet.

11. A layered composite according to one of the preceding claims, **characterised in that** the layered composite contains less than 10% by weight of glass fibres.

## Revendications

1. Composite stratifié pour un aéronef ou un véhicule spatial, contenant des premières fibres de carbone revêtues, le revêtement étant électriquement isolant et des esters polyglycoliques d'acide (méth)acrylique étant utilisés comme revêtement isolant des différentes fibres.

2. Composite stratifié selon la revendication 1, **caractérisé en ce que** le composite stratifié contient une tôle d'aluminium.

3. Composite stratifié selon la revendication 2, **caractérisé en ce que**, dans le composite stratifié, la tôle d'aluminium et les premières fibres de carbone revêtues d'une couche électriquement isolante sont au moins partiellement en contact les unes avec les autres.

4. Composite stratifié selon les revendications 2 à 3, **caractérisé en ce que**, dans le composite stratifié, la tôle d'aluminium et une couche avec des premières fibres de carbone revêtues de manière électriquement isolante sont disposées de telle sorte que les premières fibres de carbone revêtues de manière électriquement isolante isolent électriquement la couche en tôle d'aluminium d'une couche adjacente à la couche avec les premières fibres de carbone revêtues de manière électriquement isolante.

5. Composite stratifié selon les revendications 2 à 4, **caractérisé en ce qu'**il comprend des couches adjacentes de tôle d'aluminium et de premières fibres de carbone revêtues d'un revêtement électriquement isolant.

6. Composite stratifié selon la revendication 5, **caractérisé en ce qu'**une couche de matériau électriquement conducteur est adjacente à la couche de premières fibres de carbone revêtues de manière électriquement isolante.

7. Composite stratifié selon la revendication 1, **caractérisé en ce que** le composite stratifié contient, outre les premières fibres de carbone revêtues d'un revêtement électriquement isolant, d'autres fibres de carbone revêtues dont le revêtement est électriquement conducteur et les différentes couches du composite stratifié contenant soit des premières fibres de carbone revêtues d'un revêtement électriquement isolant, soit d'autres fibres de carbone revêtues d'un revêtement électriquement conducteur, soit des fibres de carbone non pourvues d'un de ces revêtements.

8. Composite stratifié selon la revendication 1 ou 7, **caractérisé en ce qu'**au moins une couche avec d'autres fibres de carbone revêtues de manière électroconductrice contient des sels de lithium.

9. Composite stratifié selon la revendication 1, 7 ou 8, **caractérisé en ce que** le composite stratifié présente une succession en contact sensiblement sur toute la surface d'une couche en tôle d'aluminium, d'une couche électriquement conductrice, d'une couche avec des premières fibres de carbone revêtues de manière électriquement isolante, d'une couche avec d'autres fibres de carbone revêtues de manière électriquement conductrice contenant des sels de lithium et d'une couche en tôle d'aluminium.

10. Composite stratifié selon la revendication 1 ou 7 à 9, **caractérisé en ce que** le composite stratifié présente une succession en contact sensiblement sur toute la surface d'une couche en tôle d'aluminium, d'une couche électriquement conductrice, d'une couche avec des premières fibres de carbone revêtues de manière électriquement isolante, d'une couche avec d'autres fibres de carbone revêtues de manière électriquement conductrice contenant des sels de lithium et d'une couche en tôle d'aluminium, d'une couche avec d'autres fibres de carbone revêtues de manière électriquement conductrice contenant des sels de lithium, d'une couche avec des premières fibres de carbone revêtues de manière électriquement isolante, d'une couche électriquement conductrice et d'une couche en tôle d'aluminium.

11. Composite stratifié selon l'une des revendications précédentes, **caractérisé en ce que** le composite stratifié contient moins de 10 % en poids de fibres de verre.
